(19) Europäisches Patentamt
European Patent Office
Office européen des brevets

(11) **EP 3 876 167 A1**

(12) **EUROPEAN PATENT APPLICATION**
published in accordance with Art. 153(4) EPC

(43) Date of publication:
**08.09.2021 Bulletin 2021/36**

(51) Int Cl.:
***G06N 10/00*** (2019.01)

(21) Application number: **19878324.3**

(22) Date of filing: **21.10.2019**

(86) International application number:
**PCT/JP2019/041395**

(87) International publication number:
**WO 2020/090559 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2018 JP 2018207825**
**12.07.2019 JP 2019130414**

(71) Applicant: **Qunasys Inc.**
**Tokyo 113-0001 (JP)**

(72) Inventors:
• **NAKANISHI, Ken**
**Tokyo 113-0001 (JP)**
• **MITARAI, Kosuke**
**Tokyo 113-0001 (JP)**
• **NAKAGAWA, Yuya**
**Tokyo 113-0001 (JP)**

(74) Representative: **V.O.**
**P.O. Box 87930**
**2508 DH Den Haag (NL)**

(54) **METHOD FOR DETERMINING HAMILTONIAN EXCITATION STATE AND PROGRAM THEREFOR**

(57) A classical computer decides a first quantum circuit U ($\theta$) of qubit number n and decides a set of k+1 initial states that are mutually orthogonal states of qubit number n. The classical computer then causes a quantum computation to be executed on a quantum computer and receives and stores the computation results. Then the classical computer performs statistical processing on the computation results for each of the initial states to compute an expected value of a Hamiltonian H, and computes an expected value sum for the set of initial states. The classical computer then changes $\theta$ and causes the quantum computation to be repeated until the expected value sum converges, and stores this as an optimal value $\theta^*$.

FIG.1

EP 3 876 167 A1

**Description**

Technical Field

Technology disclosed herein relates to a method and a program for finding excited states of a Hamiltonian.

Background Art

Great expectations are building that when quantum computers start to exceed 100 to 150 qubits, they will be able to perform simulations that hitherto have been difficult or impossible to perform by simulation on a super computer.

As the practical implementation of quantum computers progresses, as well as progress being made in research into the hardware for quantum computer, progress is also being made in research into algorithms to execute quantum computations using such hardware.

Such algorithm research started by expressing the problem to be solved by simulation as a Hamiltonian, and finding the ground state of the Hamiltonian. Now attempts are being made to not only find the ground state, but to also find the excited states thereof. Although not limited thereto, the excited states are useful to understand the processes of a chemical reaction, in the analysis of light-emitting phenomena (phosphorescence, fluorescence, and so on), and in the design of molecules exhibiting such light-emitting phenomena.

For example, "Variational Quantum Computation of Excited States", O. Higgott, D. Wang, and S. Brierley, 2018, arXiv: 1805.08138 discloses a method employed in a hybrid system, which combines a quantum computer and a classical computer, to find excited states by extending a variational quantum eigensolver (VQE), which is a known method for finding the ground state of a Hamiltonian.

SUMMARY OF INVENTION

Technical Problem

However, the method described in the aforementioned literature requires enormous computation time and a large qubit number. There is accordingly a desire to improve the efficiency of computing in a quantum computer.

In consideration of the above circumstances, an object of technology disclosed herein is to achieve more efficient computation in a method and program for finding excited states of a Hamiltonian in a hybrid system, which includes both a quantum computer and a classical computer, and to achieve more efficient computation in the classical computer configuring such a hybrid system.

Solution to Problem

In order to achieve the above object, a first aspect of technology disclosed herein is a method for finding excited states of a Hamiltonian. The method includes: a step of deciding a set of $k+1$ mutually orthogonal initial states for a Hamiltonian H of qubit number n (wherein k is an integer from 0 to $2^{n-1}$ and n is a positive integer); a step of deciding a first quantum circuit U $(\theta)$ that is a unitary quantum circuit of qubit number n; a step of deciding a first parameter $\theta_i$ and generating quantum computation information for executing the first quantum circuit U $(\theta_i)$ on a qubit cluster of a quantum computer; a step of storing a computation result of respective quantum computations based on the quantum computation information for each of the set of initial states; a step of computing an expected value sum $L_1$ $(\theta_i)$ of the Hamiltonian H expressed by Equation (1) based on the computation results for the initial states; and a step of changing the first parameter $\theta_i$ in a direction in which the sum approaches a minimum value and storing a value $\theta^*$ when a convergence condition has been satisfied.

$$L_1(\theta_i) = \sum_{j=0}^{k} w_j < \psi_j(\theta_i)|H|\psi_j(\theta_i) > \qquad (1)$$

Wherein $| \psi_j (\theta_i) >$ is a quantum state after executing the first quantum circuit $(\theta_i)$ for a $j^{th}$ initial state, and $w_j$ is a positive coefficient.

A second aspect of technology disclosed herein is the first aspect, wherein ws that is one of coefficients $w_j$ (wherein s is an integer from 0 to k) has a smaller value than other of the coefficients $w_j$ (when $j \neq s$).

A third aspect of technology disclosed herein is the second aspect, further including a step of transmitting information relating to a quantum state $|\psi_s(\theta^*)>$ as solution information relating to a $k^{th}$ excited state.

A fourth aspect of technology disclosed herein is the first aspect, wherein the coefficients $w_j$ are each the same value.

A fifth aspect of technology disclosed herein is the fourth aspect, further including: a step of deciding a second quantum circuit V $(\varphi)$ that intermingles the set of initial states; a step of deciding a second parameter $\varphi_i$ and generating quantum computation information for executing a first quantum circuit U $(\theta^*)$ and a second quantum circuit V $(\varphi_i)$ on a qubit cluster of a quantum computer; a step of storing a computation result of the quantum computation for a given $s^{th}$ initial state from out of the set of initial states based on the quantum computation information (wherein s is an integer from 0 to k); a step of computing an expected value $L_2(\varphi_i)$ of the Hamiltonian H expressed by Equation (2) based on the computation result for the $s^{th}$ initial state; and a step of changing the second parameter $\varphi_i$ in a direction in which the expected value approaches a maximum value and storing a value $\varphi^*$ when a convergence condition has been satisfied.

$$L_2(\phi_i) = <\psi_s(\phi_i)|H|\psi_s(\phi_i)> \qquad (2)$$

A sixth aspect of technology disclosed herein is the fifth aspect, wherein the second quantum circuit V $(\varphi)$ operates only on k+1 states of the set of initial states.

A seventh aspect of technology disclosed herein is the fifth aspect of the sixth aspect, further including a step of transmitting $|\psi_j(\varphi_i)>$ as a quantum state after the second quantum circuit $(\varphi_i)$ has been executed for the $j^{th}$ initial state, and transmitting information relating to $|\psi_s(\varphi^*)>$ as solution information relating to a $k^{th}$ excited state.

An eighth aspect of technology disclosed herein is any one of the first aspect to the seventh aspect, wherein the method is executed by a classical computer connected to the quantum computer over a computer network.

A ninth aspect of technology disclosed herein is a program to cause a method for finding excited states of a Hamiltonian to be executed on a classical computer. The method causing the classical computer to execute steps including: a step of deciding a set of k+1 mutually orthogonal initial states for a Hamiltonian H of qubit number n (wherein k is an integer from 0 to $2^{n-1}$ and n is a positive integer); a step of deciding a first quantum circuit U $(\theta)$ that is a unitary quantum circuit of qubit number n; a step of deciding a first parameter $\theta_i$ and generating quantum computation information for executing the first quantum circuit U $(\theta_i)$ on a qubit cluster of a quantum computer; a step of storing a computation result of respective quantum computations based on the quantum computation information for each of the set of initial states; a step of computing an expected value sum $L_1(\theta_i)$ of the Hamiltonian H expressed by Equation (1) based on the computation results for the initial states; and a step of changing the first parameter $\theta_i$ in a direction in which the sum approaches a minimum value and storing a value $\theta^*$ when a convergence condition has been satisfied.

$$L_1(\theta_i) = \sum_{j=0}^{k} w_j <\psi_j(\theta_i)|H|\psi_j(\theta_i)> \qquad (1)$$

Wherein $|\psi_j(\theta_i)>$ is a quantum state after executing the first quantum circuit $(\theta_i)$ for a $j^{th}$ initial state, and $w_j$ is a positive coefficient.

A tenth aspect of technology disclosed herein is a classical computer for finding excited states of a Hamiltonian. The classical computer is configured to: decide a set of k+1 mutually orthogonal initial states for a Hamiltonian H of qubit number n (wherein k is an integer from 0 to $2^{n-1}$ and n is a positive integer); decide a first quantum circuit U $(\theta)$ that is a unitary quantum circuit of qubit number n; decide a first parameter $\theta_i$ and generate quantum computation information for executing the first quantum circuit U $(\theta_i)$ on a qubit cluster of a quantum computer; store a computation result of respective quantum computations based on the quantum computation information for each of the set of initial states; compute an expected value sum $L_1(\theta_i)$ of the Hamiltonian H expressed by Equation (1) based on the computation results for the initial states; and change the first parameter $\theta_i$ in a direction in which the sum approaches a minimum value and store a value $\theta^*$ when a convergence condition has been satisfied.

$$L_1(\theta_i) = \sum_{j=0}^{k} w_j <\psi_j(\theta_i)|H|\psi_j(\theta_i)> \qquad (1)$$

Wherein $|\psi_j(\theta_i)>$ is a quantum state after executing the first quantum circuit $(\theta_i)$ for a $j^{th}$ initial state, and $w_j$ is a positive coefficient.

An eleventh aspect of technology disclosed herein is the first aspect of technology disclosed herein for computing an energy $E_G$ of a ground state of the Hamiltonian H, an $n^{th}$ eigenvalue $E_n$ of the Hamiltonian H, $< E_n |c_q| G >$ (wherein $| E_n >$ is an $n^{th}$ eigenstate of the Hamiltonian H, $| G >$ is the Hamiltonian H ground state, and $c_q$ is an electron operator), and $< E_n |c_q\dagger| G >$ (wherein † is a Hermitian conjugate), which appear in an imaginary part $A_q(\omega)$ of a spectral function for a Green's function (wherein q is a wavenumber and co is a frequency). When doing so the method further includes: a step of using Equation (3) below to compute an energy $E_G$ of a ground state of the Hamiltonian H and a given $j^{th}$ eigenvalue $E_j$ of the Hamiltonian H based on the value $\theta^*$ when the convergence condition was satisfied; a step of splitting the electron operator $c_k$ into an electron operator real part and an electron operator imaginary part; a step of computing $< E_n |c_q| G >$ and $< E_n |c_q\dagger| G >$ based on the value $\theta^*$ when the convergence condition was satisfied by substituting the $n^{th}$ eigenstate $< E_n |$ of the Hamiltonian H for $< \psi_i(\theta^*) |$ of $< \psi_i(\theta^*) | A | \psi_i(\theta^*) >$ on the left side of Equation (4) below, by substituting the Hamiltonian H ground state $| G >$ for $\psi_i(\theta^*) >$ of $< \psi_i(\theta^*) | A | \psi_i(\theta^*) >$ on the left side of Equation (4) below, setting a given $i^{th}$ eigenvalue $E_i$ of the Hamiltonian H as the $n^{th}$ eigenvalue $E_n$ of the Hamiltonian H, setting a given $j^{th}$ eigenvalue $E_j$ of the Hamiltonian H as the energy $E_G$ of the Hamiltonian H ground state, and by substituting the electron operator real part and the electron operator imaginary part for a given variable A; a step of computing the imaginary part $A_q(\omega)$ of the spectral function for the Green's function by computing Equation (5) below based on the Hamiltonian H ground state energy $E_G$, the $n^{th}$ eigenvalue $E_n$ of the Hamiltonian H as obtained by setting n for the j of the given $j^{th}$ eigenvalue $E_j$ of the Hamiltonian H, $< E_n |c_q| G >$, and $< E_n |c_q\dagger| G >$.

$$
\begin{aligned}
E_G &= \langle \psi_0(\boldsymbol{\theta}^*)|H|\psi_0(\boldsymbol{\theta}^*)\rangle \\
E_j &= \langle \psi_j(\boldsymbol{\theta}^*)|H|\psi_j(\boldsymbol{\theta}^*)\rangle \\
|G\rangle &= |\psi_0(\boldsymbol{\theta}^*)\rangle \\
|E_j\rangle &= |\psi_j(\boldsymbol{\theta}^*)\rangle
\end{aligned}
\tag{3}
$$

$$
\mathrm{Re}\big(\langle \psi_i(\boldsymbol{\theta}^*)|A|\psi_j(\boldsymbol{\theta}^*)\rangle\big)
$$

$$
= \langle \psi_{ij}^{+x}(\boldsymbol{\theta}^*)|A|\psi_{ij}^{+x}(\boldsymbol{\theta}^*)\rangle - \frac{1}{2}\langle \psi_i(\boldsymbol{\theta}^*)|A|\psi_i(\boldsymbol{\theta}^*)\rangle - \frac{1}{2}\langle \psi_j(\boldsymbol{\theta}^*)|A|\psi_j(\boldsymbol{\theta}^*)\rangle
$$

$$
\mathrm{Im}\big(\langle \psi_i(\boldsymbol{\theta}^*)|A|\psi_j(\boldsymbol{\theta}^*)\rangle\big)
$$

$$
= \langle \psi_{ij}^{+y}(\boldsymbol{\theta}^*)|A|\psi_{ij}^{+y}(\boldsymbol{\theta}^*)\rangle - \frac{1}{2}\langle \psi_i(\boldsymbol{\theta}^*)|A|\psi_i(\boldsymbol{\theta}^*)\rangle - \frac{1}{2}\langle \psi_j(\boldsymbol{\theta}^*)|A|\psi_j(\boldsymbol{\theta}^*)\rangle
\tag{4}
$$

$$
A_q(\omega) = \sum_n \left( \frac{\left|\langle E_n|c_q^\dagger|G\rangle\right|^2}{\omega + E_G - E_n + i\eta} + \frac{\left|\langle E_n|c_q|G\rangle\right|^2}{\omega - E_G + E_n + i\eta} \right)
\tag{5}
$$

Wherein $|\psi^{+x}_{ij}(\theta) >$ and $|\psi^{+y}_{ij}(\theta) >$, are defined as follows. Note that the symbol "i" represents an imaginary unit when appearing in a location other than a suffix

$$
\left|\psi_{ij}^{+x}(\boldsymbol{\theta})\right\rangle = \frac{1}{\sqrt{2}}\big(|\psi_i(\boldsymbol{\theta})\rangle + |\psi_j(\boldsymbol{\theta})\rangle\big)
$$

$$\left|\psi_{ij}^{+,x}(\boldsymbol{\theta})\right\rangle = \frac{1}{\sqrt{2}}\left(\left|\psi_i(\boldsymbol{\theta})\right\rangle + \left|\psi_j(\boldsymbol{\theta})\right\rangle\right)$$

A twelfth aspect of technology disclosed herein is a quantum computer for finding excited states of a Hamiltonian. The quantum computer is configured to, based on quantum computation information including a set of k+1 mutually orthogonal initial states for a Hamiltonian H of qubit number n (wherein k is an integer from 0 to $2^{n-1}$ and n is a positive integer), a first quantum circuit U ($\theta$) that is a unitary quantum circuit of qubit number n, and a first parameter $\theta_i$, execute the first quantum circuit U ($\theta_i$) on a qubit cluster, and to output a computation result of respective quantum computations based on the quantum computation information for each of the set of initial states.

A thirteenth aspect of technology disclosed herein is a hybrid system for finding excited states of a Hamiltonian, the hybrid system including a classical computer of technology disclosed herein and a quantum computer of technology disclosed herein. Advantageous Effects

Aspects of technology disclosed herein enables more efficient computation in a method and program for finding excited states of a Hamiltonian in a hybrid system that includes both a quantum computer and a classical computer by employing properties derived from a set of k+1 initial states, with the initial states required to be mutually orthogonal and decided according to a qubit number n of a Hamiltonian H and an energy excitation level k to be found. The aspects also enable more efficient computation in the classical computer configuring the hybrid system.

BRIEF DESCRIPTION OF DRAWINGS

Fig. 1 is a diagram illustrating a hybrid system according to a first exemplary embodiment of technology disclosed herein.

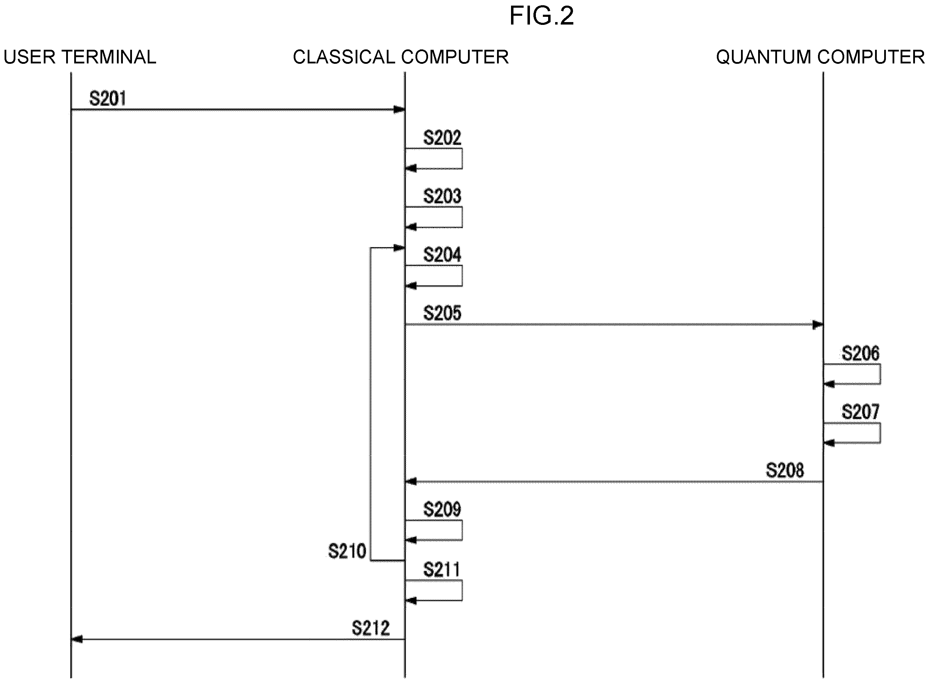

Fig. 2 is a diagram illustrating a flow of a method to identify excited states according to the first exemplary embodiment of technology disclosed herein.

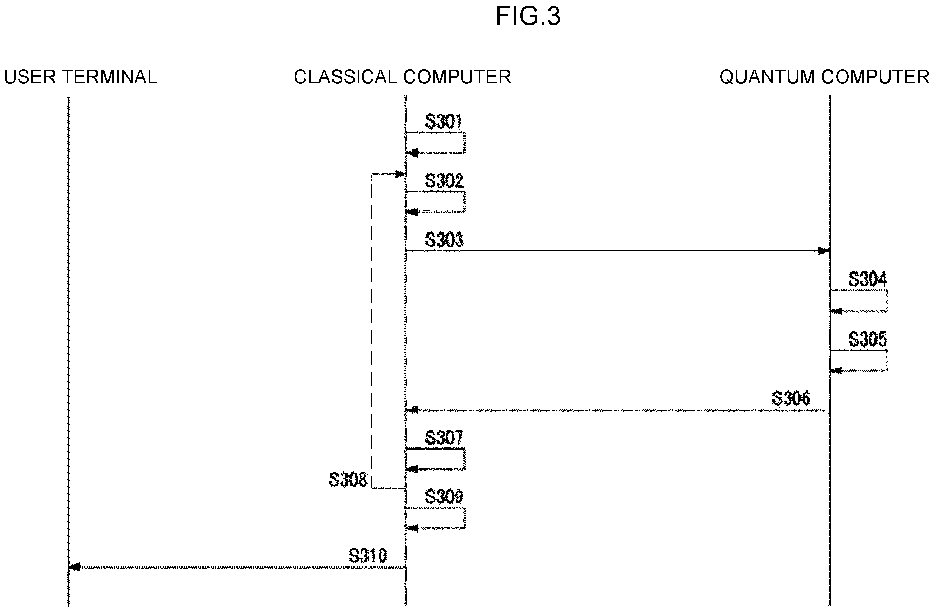

Fig. 3 is a diagram illustrating a flow of a method to identify excited states according to a second exemplary embodiment of technology disclosed herein.

Fig. 4 is a diagram schematically illustrating an example of a second quantum circuit V ($\varphi$) in a second exemplary embodiment of technology disclosed herein.

Fig. 5 is a diagram illustrating an example of a first quantum circuit U ($\theta$) and the second quantum circuit V ($\varphi$) illustrated in Fig. 4.

Fig. 6 is a diagram illustrating an optimization process for a first parameter $\theta$.

Fig. 7 is a diagram illustrating an optimization process for a second parameter $\varphi$.

DESCRIPTION OF EMBODIMENTS

Detailed explanation follows regarding exemplary embodiments of technology disclosed herein, with reference to the drawings.

First Exemplary Embodiment

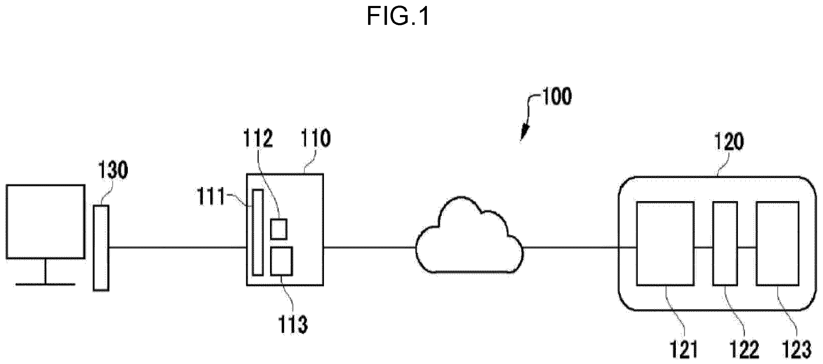

Fig. 1 illustrates a hybrid system according to a first exemplary embodiment of technology disclosed herein. A hybrid system 100 includes a classical computer 110 and a quantum computer 120. The classical computer 110 and the quantum computer 120 are, for example, connected together over a computer network such as an IP network. Although cases in which both the classical computer 110 and the quantum computer 120 are administered by a single organization are also conceivable, the following explanation concerns an example in which the classical computer 110 and the quantum computer 120 are administered by separate organizations, and in which overall computation progresses by the quantum computer 120 performing required quantum computations in response to requests from the classical computer 110, and then returning to the classical computer 110 the computation results of such quantum computations.

The classical computer 110 includes a communication section 111 such as a communication interface, a processing section 112 such as a processor, a CPU, or the like, and a storage section 113 including a storage device such as memory or a hard disk, or a storage medium. The classical computer 110 may be configured to perform various processing by executing a program, and the classical computer 110 may also include one or plural devices or servers. The program may be one program, or may include plural programs, and may be configured as a non-transitory program product recorded on a computer-readable storage medium.

First, the classical computer 110 receives problem information relating to a problem to be solved by quantum computing from a user terminal 130 of a user (S201). Examples of such a problem include the energy of a $k^{th}$ excited state of a molecule, and in particular of a light-emitting molecule such as a molecule including an aromatic ring, or the energy of the $k^{th}$ excited state when a catalyst is in close proximity to the target molecule (wherein k is an integer of 1 or greater). In cases in which such a problem can be expressed by the user as a Hamiltonian, the Hamiltonian may be received as problem information. The user terminal 130 may transmit the problem information over a computer network such as an IP network to the classical computer 110 or to a storage medium or storage device capable of accessing the classical computer 110. Another conceivable approach is to store the problem information on a storage medium or storage device and pass the storage medium or storage device to an administrator of the classical computer 110 for the administrator to input the problem information to the classical computer 110 using the storage medium or storage device.

The classical computer 110 converts the problem information to a quantum computable Hamiltonian H, as required. In cases in which the qubit number available to the classical computer 110 in the quantum computer 120 is N (wherein N is an integer), as an example, the qubit number n of the Hamiltonian H the classical computer 110 is able to process may conceivably be N or lower. However, there is no limitation to the qubit number n of the Hamiltonian H being the qubit number N of the quantum computer 120 or lower, and there may be cases in which the qubit number n of the Hamiltonian H is a value exceeding N. Even in cases in which the problem to be solved is in the form of a Hamiltonian, there may be cases in which the Hamiltonian H needs to be converted into a format more easily handled by a quantum computer using Jordan-Wigner conversion or the like. Moreover, in cases in which the problem to be solved is not provided as a Hamiltonian, there may be a need for conversion to a Hamiltonian representation. Moreover, on receipt from the user terminal 130 of a k value for the $k^{th}$ excited state the user wishes to find, the classical computer 110 may employ this k value. However, when the k value is not received, processing may proceed to quantum computation by taking any integer from 1 to $2^{n-1}$ as the k value.

Next, the classical computer 110 decides a first quantum circuit U $(\theta)$ of qubit number n (S202). Any given quantum circuit that is a unitary quantum circuit may be determined as the first quantum circuit U $(\theta)$, and this may, for example, be a quantum circuit according to the Hamiltonian H. The first quantum circuit U $(\theta)$ is also sometimes referred to as a variational quantum circuit due being parameterized. The first quantum circuit U $(\theta)$ may be stored in advance in the storage section 113 or in a storage medium or storage device accessible to the classical computer 110, and may be decided by identifying which. In cases in which a circuit according to the Hamiltonian H is employed, the first quantum circuit U $(\theta)$ may be decided by setting the Hamiltonian H based on the problem information and then generating a circuit appropriate to the Hamiltonian H.

The classical computer 110 also decides a set of k+1 initial states, which are mutually orthogonal initial states and of qubit number n (S203). For example, |0000>, |0001>, and |0010> may be used as the set of initial states in a case in which n = 4 and k = 2. The set of initial states may be decided by selecting, from out of quantum states stored in the storage section 113 or in the storage medium or storage device accessible to the classical computer 110, according to the Hamiltonian H qubit number n and the energy excitation level k to be found. Alternatively, the set of initial states may be decided by generation according to the Hamiltonian H qubit number n and the energy excitation level k to be found.

The classical computer 110 then decides a first parameter $\theta_i$ of the first quantum circuit U $(\theta)$ (wherein i is an integer of 1 or greater) (S204). For example, the first parameter $\theta_1$ is conceivably a random number or pseudorandom number in a fixed range, such as from 0 up to but not including $2\pi$. Note although explanation here is of a case in which the first quantum circuit U $(\theta)$ is decided, then the initial states are decided, and then the first parameters $\theta_i$ are decided, in this sequence, a different sequence may be employed to this sequence.

The classical computer 110 then transmits information for quantum computation to the quantum computer 120 (S205). In a case in which i = 1, the quantum computation information includes initial setting information to realize each of the set of initial states in a qubit cluster 123 of the quantum computer 120, and includes quantum gate information to execute the first quantum circuit U $(\theta_i)$ in the qubit cluster 123. The quantum computation information for cases in which i ≥ 2 may contain the quantum gate information alone. The initial setting information may be transmitted at the same time as the quantum computation information or may be transmitted separately thereto, either before or after.

As an example, based on the quantum computation information transmitted from the classical computer 110, the quantum computer 120 generates an electromagnetic wave for irradiating at least one qubit out of the qubit cluster 123. The quantum circuit is executed by performing the electromagnetic wave irradiation. In the example illustrated in Fig. 1, the quantum computer 120 includes a mediation device 121 to perform communication with the classical computer 110, an electromagnetic wave generation device 122 to generate electromagnetic waves in response to requests from the mediation device 121, and the qubit cluster 123 subjected to irradiation of electromagnetic waves from the electromagnetic wave generation device 122. In the present specification, the "quantum computer" refers to a computer that performs at least some computation with qubits, rather than denoting a computer that does not perform any computation using classical bits at all.

The mediation device 121 is a classical computer that performs computation using classical bits, and may also perform some or all of the processing that is described in the present specification as being performed by the classical computer 110, on behalf thereof. For example, when the first quantum circuit U ($\theta$) has been stored or decided, the quantum gate information to execute the first quantum circuit U ($\theta_i$) on the qubit cluster 123 may be generated in the mediation device 121 in response to receipt of the first parameter $\theta i$ as the quantum computation information. Moreover, the initial setting information to implement the set of initial states in the qubit cluster 123 may be generated in the mediation device 121 in response to receipt of information expressing the set of initial states as the quantum computation information.

Based on the received quantum computation information, the quantum computer 120 executes the quantum computation (S206). Initial settings based on the initial setting information are needed for the qubit cluster 123 in order to execute the quantum computation. In a case in which n = 4 and k = 2, for example |0000>, |0001>, and |0010> may be used as the set of initial states, and prior to executing the first quantum circuit U ($\theta_i$) for the respective initial states, the qubit cluster 123 executes a gate operation such as an X gate or the like so as to achieve the respective initial states. Since executable gate operations are different according to the specifics of the quantum computer 120, the initial setting information and the quantum gate information are split up or transformed as required into gate operations or combinations of quantum gates executable by the quantum computer 120 being employed. The information after being split up or transformed may be used as the initial setting information and the quantum gate information. Alternatively, the information prior to being split up or transformed may be used as the initial setting information and the quantum gate information, and then split up or transformed in the quantum computer 120 as required.

The respective gate operations are then converted into corresponding electromagnetic waveforms, and the qubit cluster 123 is irradiated by the electromagnetic wave generation device 122 with the generated electromagnetic waves. The conversion to electromagnetic waveforms may be performed by the electromagnetic wave generation device 122, or may be performed by the mediation device 121. Alternatively, such conversion may be performed in the classical computer 110, and the quantum computation information generated in electromagnetic waveform format. Although an example is explained in which the quantum circuit is executed by irradiation with electromagnetic waves, this does not exclude execution of the quantum circuit using a different method.

The quantum computer 120 then measures a computation result of the quantum computation (S207). The quantum computation is executed and measured for each initial state in the set of initial states. For example, bit strings such as those in the table below may be obtained as measurement results. This example illustrates results for when electromagnetic wave irradiation and measurement is repeatedly performed for n = 4 and k = 2. The number of repetitions may be decided by the classical computer 110 and transmitted to the quantum computer 120 as part of the quantum computation information, or separately to the quantum computation information. Alternatively, the number of repetitions may be decided by the quantum computer 120 or the mediation device 121 thereof.

Table 1

|      | \|0000> | \|0001> | \|0010> |
|------|---------|---------|---------|
| 0000 | 10      | 11      | 76      |
| 0001 | 50      | 14      | 22      |
| 0010 | 14      | 100     | 17      |
| 0011 | 12      | 45      | 33      |
| 0100 | 85      | 10      | 20      |
| .    | .       | .       | .       |
| .    | .       | .       | .       |
| .    | .       | .       | .       |

The classical computer 110 receives and stores the measurement results of the quantum computation according to the quantum computation information from the quantum computer 120 (S208). An expected value for the energy of the Hamiltonian H is then computed by performing statistical processing on the measurement results for each of the initial states, and an expected value sum $L_1(\theta_i)$ is computed for the set of initial states (S209). A quantum state following execution of the first quantum circuit U ($\theta_i$) for a $j^{th}$ initial state (wherein j is an integer from 0 to k) out of a set of the k+1 initial states is denoted by $| \psi_j (\theta_i) >$, and the expected value sum $L_1 (\theta_i)$ can be expressed using the following Equation. Note that $w_j$ is a positive coefficient.

$$L_1(\theta_i) = \sum_{j=0}^{k} w_j < \psi_j(\theta_i)|H|\psi_j(\theta_i) >$$

Next, when i = 1, i is incremented to update the first parameter $\theta_i$, and the expected value sum $L_1(\theta_2)$ is computed for this first parameter $\theta_2$. When i = 2 or greater, convergence determination is performed as to whether or not the expected value sum $L_1(\theta_2)$ has converged (S210). For example, in order to obtain a value of $\theta_i$ that minimizes $L_1(\theta_i)$, or a value close thereto, determination that convergence has occurred can be made when $| L_1(\theta_{i+1}) - L_1(\theta_i) | <$ $\varepsilon$ is satisfied, wherein $\varepsilon$ as a threshold. In cases in which there is no convergence, i is incremented to update the first parameter $\theta_i$, and the computation of the expected value sum is repeated. The first parameter $\theta_i$ may be decided using an optimization algorithm such as the Nelder-Mead method, or alternatively $\theta_i$ may be moved randomly without relying on an optimization method, and repeated attempts performed until the cost function $L_1(\theta_i)$ reaches a desired value, for example a minimum value.

Note that changing the first parameter $\theta_i$ so as to make the expected value sum $L_1(\theta_i)$ approach a minimum value is synonymous with appending a negative sign to the expected value and changing the first parameter $\theta_i$ so as to make the expected value sum $L_1(\theta_i)$ approach a maximum value thereof.

The classical computer 110 stores $\theta_i$ for when the expected value sum $L_1(\theta_i)$ converges as an optimal value $\theta^*$ of the first parameter $\theta_i$ (S211).

The expected value computation for each of the initial states, the expected value sum computation, and the convergence determination that have been described above as being performed by the classical computer 110, may alternatively be performed on its behalf by the mediation device 121 of the quantum computer 120.

In consideration that the first quantum circuit U $(\theta_i)$ has is a unitary quantum circuit, minimizing the expected value sum $L_1(\theta_i)$ means that the respective quantum states $| \psi_j(\theta^*) >$ are mutually orthogonal to each other, and that each is expressed by a linear combination of the Hamiltonian H states from a ground state $| g >$ to the $k^{th}$ excited state $| e_k >$. This is because the $L_1(\theta_i)$ would have to be a larger value than the minimum value if quantum states of the k + $1^{th}$ excited state $| e_{k+1} >$ or greater were to be included.

It is apparent that, for example, in a case in which $w_k$ is 1/2 and from wo to $w_{k-1}$ is 1, then the first quantum circuit U $(\theta_i)$ is optimized so as to give the greatest energy expected value with the smallest coefficients for $| \psi_k(\theta_i) >$, and $| \psi_k(\theta^*) > = | e_k >$. Setting a coefficient ws (wherein s is an integer from 0 to k) for coefficient $w_j$ so as to be smaller than the other coefficients $w_j$ (wherein $j \neq s$) in this manner, enables a quantum state $| \psi_s(\theta_i) >$ corresponding to this coefficient to be optimized for the $k^{th}$ excited state.

As another example, it is also apparent that finding $w_j < w_{j-1}$ achieves $| \psi_j(\theta^*) > = | e_j >$. Arranging the coefficients $w_j$ in sequence and taking the smaller value therefor enables the quantum state $| \psi_j(\theta_i) >$ corresponding to the $j^{th}$ coefficient to be optimized for the $j^{th}$ excited state. Conversely, arranging the coefficients $w_j$ in sequence and taking the larger value therefor enables the quantum state $| \psi_j(\theta_i) >$ corresponding to the $j^{th}$ coefficient to be optimized for the (k - j)$^{th}$ excited state.

In cases in which the $k^{th}$ excited state $| e_k >$ is obtained as in this example, the classical computer 110 is able to transmit solution information to the user terminal 130, relating to the solution of a problem the user of the user terminal 130 wishes to solve (S212). Information relating to the $k^{th}$ excited state is included in the solution information, and more specifically the solution information may include the expected value of the Hamiltonian H for the $k^{th}$ excited state. The solution information may also include a measurement result of the $k^{th}$ excited state or information corresponding thereto. The solution information may also include a probability of transition between the $k^{th}$ excited state and an $m^{th}$ excited state (wherein $0 \leq m < k$), the electric susceptibility of molecules computed based on this transition probability, or the like.

Another conceivable example of application of a method according to the present exemplary embodiment is to employ a quantum circuit to generate all excited states for the first quantum circuit U $(\theta_i)$ up to the $k^{th}$ excited state described above so as to simulate time evolution under the Hamiltonian H.

In the present exemplary embodiment, identification of any given $k^{th}$ excited state of the Hamiltonian H of qubit number n can be performed in a short time with a small qubit number by optimizing the single parameter of the first parameter $\theta_i$. In Non-Patent Document 1, the qubit number of the quantum computer 120 needs to be 2n, whereas the present exemplary embodiment enables this demand to be halved in number to n. The inventors simulated the quantum computer 120 using a classical computer for the comparatively small qubit number n = 4 and verified the present exemplary embodiment. Logically it is reasonable to expect that were the quantum computer 120 to actually be employed instead of simulated then similar results would be obtained, and moreover, it is logical that similar results would still be obtained for a qubit number n of 100 or greater, or of 150 or greater.

Although the foregoing explanation anticipates a case in which the classical computer 110 and the quantum computer 120 are administered by different organizations, for cases in which the classical computer 110 and the quantum computer 120 are administered by the same organization, there is no longer a need to transmit the quantum computation information from the classical computer 110 to the quantum computer 120, or to transmit the measurement results from the quantum computer 120 to the classical computer 110. This means that the role of the classical computer 110 in the foregoing explanation may conceivably be undertaken by the mediation device 121 of the quantum computer 120.

Please note that in the present specification, unless the word "solely" is used, as in "based solely on xx", "according solely to xx", or "solely in the case of xx", this should be deemed to mean that consideration of other additional information may also be anticipated. Moreover, please note that wording such as "in the case of A, then B" should be deemed not to mean that "B is always be true in the case of A", unless clearly stated as such.

Moreover, in the interest of clarification please note that suppose there is an aspect in which an operation different to the operations described in the present specification is performed in a method, program, terminal, device, server, or system (hereafter "method or the like"), the aspects of the technology disclosed herein concern operations the same as operations described in the present specification, and the additional presence of the operation different to the operations described in the present specification does not cause the method or the like to fall outside the scope of the aspects of the technology disclosed herein.

Not that the various alternatives discussed in the first exemplary embodiment may similarly be applied to the second exemplary embodiment or the third exemplary embodiment.


Second Exemplary Embodiment


In the first exemplary embodiment, when the coefficients $w_j$ are all set to the same value, although $| \psi_j (\theta^*) >$ can be expressed by a linear combination of states of the Hamiltonian H from the ground state $| g >$ to the $k^{th}$ excited state $| e_k >$, these are intermingled states. $| \psi_j (\theta^*) >$ obtained by optimizing the first parameter $\theta_i$ can be understood to be confined in an extensible subspace of $k + 1$ quantum states from out of $2^n$ mutually orthogonal quantum states that are possible quantum states for a qubit number n. In cases in which the coefficients $w_j$ are all set to the same value, the second exemplary embodiment is able to find the $k^{th}$ excited state in this subspace by introducing a second quantum circuit $V (\varphi)$.

After obtaining the optimal value $\theta^*$ of the first parameter $\theta_i$, the classical computer 110 decides the second quantum circuit $V (\varphi)$ (S301). The second quantum circuit $V (\varphi)$ is one in which a set of initial states described above are intermingled, in other words the respective initial states are transformed into a quantum state in space as expressed by a linear combination of these initial states. The second quantum circuit $V (\varphi)$ may be referred to as a variational quantum circuit due to being parameterized. For example, in a case in which n = 4 and k = 3, the set of initial states for a qubit number 4 are respectively expressed by bit strings |0000>, |0001>, |0010>, |0011> filling from the lowest order bit, and the second quantum circuit $V (\varphi)$ may be thought of as being a circuit operated solely by filling the two lowest order bits. More generally, the second quantum circuit $V (\varphi)$ may be thought of as operating solely in a set of k+1 initial states.

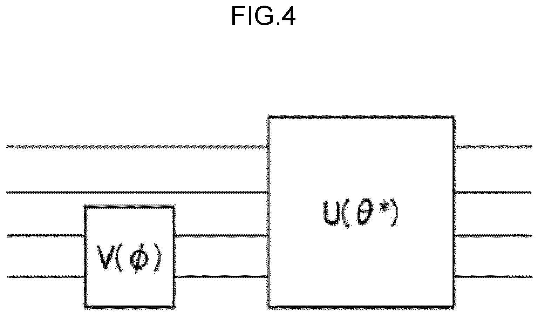

Fig. 4 schematically illustrates an example of the first quantum circuit $U (\theta)$ and the second quantum circuit $V (\varphi)$. The second quantum circuit $V (\varphi)$ may be stored in the storage section 113 or in a storage medium or storage device accessible to the classical computer 110, and may be decided by identifying which.

Next, the classical computer 110 decides a second parameter $\varphi_i$ (wherein i is an integer of 1 or greater) (S302). For example, the second parameter $\varphi_1$ may be a random number or pseudorandom number in a fixed range, such as from 0 up to but not including $2\pi$. Note that although explanation is given regarding a case in which the second quantum circuit $V (\varphi)$ is decided, and then the second parameter $\varphi_i$ is decided, in this sequence, a different sequence may be employed to this sequence.

The classical computer 110 then transmits quantum computation information to the quantum computer 120, similarly to in the first exemplary embodiment (S303). The point of difference here is that the information transmitted as quantum gate information includes information to execute the second quantum circuit $V (\varphi_i)$ in the qubit cluster 123 in addition to the information to execute the optimized first quantum circuit $U (\theta^*)$ in the qubit cluster 123, and also in the point that the information transmitted as the initial setting information may include information to realize a given $s^{th}$ initial state (wherein s is an integer from 0 to k) out of the set of initial states in the qubit cluster 123 of the quantum computer 120.

Based on the received quantum computation information, the quantum computer 120 executes the quantum computation for the $s^{th}$ initial state (S304), and measures the result of the quantum computation (S305). The point that the electromagnetic wave irradiation and measurements are repeated, and the point that there is no limitation to electromagnetic wave irradiation, are similar to in the first exemplary embodiment.

The classical computer 110 then receives and stores the computation result of the quantum computation according to the quantum computation information from the quantum computer 120 (S306). The classical computer 110 then computes an energy expected value $L_2 (\varphi_i)$ of the Hamiltonian H by performing statistical processing on the measurement results for the $s^{th}$ initial state (S307). The quantum state after executing the first quantum circuit $U (\theta^*)$ and the second quantum circuit $V (\varphi_i)$ for the given $s^{th}$ initial state is denoted $| \psi_s (\varphi_i) >$, and the expected value $L_2 (\varphi_i)$ may be expressed by the following Equation.

$$L_2(\phi_i) = - <\psi_s(\phi_i)|H|\psi_s(\phi_i)>$$

Next, when i = 1, i is incremented to update the first parameter $\theta_i$, and the expected value $L_2(\varphi_2)$ is computed for this second parameter $\varphi_2$. When i = 2 or greater, convergence determination is performed as to whether or not the expected value $L_2(\varphi_2)$ has converged (S308). The convergence determination may be performed in a similar manner to in the first exemplary embodiment.

The classical computer 110 stores $\varphi_i$ at the convergence of the expected value $L_2(\varphi_i)$ as an optimal value $\varphi^*$ of the second parameter $\varphi_i$ (S309).

The expected value computation and the convergence determination performed for the s$^{th}$ initial state that have been described above as being performed by the classical computer 110 may alternatively be performed on its behalf by the mediation device 121 of the quantum computer 120.

Minimizing the expected value $L_2(\varphi_i)$ means that quantum states $|\psi_j(\theta^*)>$ from executing the first quantum circuit $U(\theta^*)$ for the initial states are mutually orthogonal to each other and that each is expressed by a linear combination of the Hamiltonian H states from the ground state $|g>$ to the k$^{th}$ excited state $|e_k>$. Considering that the second quantum circuit $V(\varphi_i)$ has intermingled initial states, this means that $|\psi_s(\theta^*)>$ is the k$^{th}$ excited state $|e_k>$. This is because $L_2(\varphi_i)$ would have to be a larger value than the minimum value if quantum states of the k-1$^{th}$ excited state $|e_{k-1}>$ or lower were to be included.

$L_2(\varphi_i)$ as described above is defined by appending a negative sign to the energy expected value of the Hamiltonian H at $|\psi_s(\varphi_i)>$. When the second parameter $\varphi_i$ is changed so as to cause the expected value $L_2(\varphi_i)$ to approach the minimum value, the Hamiltonian H energy expected value itself is defined as $L_2(\varphi_i)$ without appending the sign, and this is synonymous with changing the second parameter $\varphi_i$ so as to approach the maximum value.

The classical computer 110 may, as required, transmit to the user terminal 130 solution information relating to the solution of a problem the user of the user terminal 130 wishes to solve (S310). The solution information may include information relating to the k$^{th}$ excited state, and more specifically, may include the expected value of the Hamiltonian H for the k$^{th}$ excited state. The solution information may also include a measurement result for the k$^{th}$ excited state or information corresponding to thereto.

In the present exemplary embodiment, quantum states are confined in an extensible subspace of k+1 quantum states from out of $2^n$ mutually orthogonal quantum states that are possible quantum states for a qubit number n by optimizing the first parameter $\theta i$, and then optimization is performed of the additional second parameter $\varphi_i$ within this subspace. This enables faster excited state production than in the first exemplary embodiment.

Third Exemplary Embodiment

In a third exemplary embodiment, a Green's function is computed using a method to find the excited states of the Hamiltonian H of either the first exemplary embodiment or the second exemplary embodiment.

A Green's function is a function employed in logical computation and the like. For example, computing a Green's function enables information relating to the phase of a material to be obtained. Equation (A) below is one expression format of a Green's function.

$$G_{ab}^R(t) = -i\Theta(t)\left\langle c_a(t)c_b^\dagger(0) + c_b^\dagger(0)c_a(t)\right\rangle_0, \tag{A}$$

Wherein: t is a timing; $c_a(\cdot)$ and $c_b(\cdot)$ are electron operators; and a and b are excitation modes (for example wavenumbers) of an electron; $\Theta(t)$ is a Heaviside step function. Moreover, $\dagger$ represents a Hermitian conjugate. Note that in the following explanation, "i" represents the imaginary unit when appearing in a location other than a suffix.

In the third exemplary embodiment, a method to find the excited states of the Hamiltonian H is employed to compute a spectral function for the Green's function. This also enables the Green's function to be computed.

In the third exemplary embodiment, only the imaginary part of a spectral function obtained by performing a Fourier transformation on the Green's function is computed. This is since it is possible to reconstruct the real part of the spectral function using Kramers-Kronig relations as long as a computation result can be obtained for the imaginary part of the spectral function.

The following equation is for a spectral function for the Green's function and is the imaginary part of the spectral function. Note that $\eta$ is a positive constant. q is a wavenumber. Although a case is described in which the electron excitation modes a, b both have wavenumber q and up-spin ↑, the third exemplary embodiment is similarly applicable to a Green's function related to excitation modes a, b in general.

$$\tilde{G}_q^R(\omega) = \int_{-\infty}^{\infty} dt\, e^{i(\omega+i\eta)t} G_q^R(t)$$

$$A_q(\omega) = -\pi^{-1} \operatorname{Im} \tilde{G}_q^R(\omega).$$

(B)

The hybrid system 100 of the third exemplary embodiment computes an imaginary part $A_q(\omega)$ of the above spectral function. The imaginary part $A_q(\omega)$ of the spectral function can be expressed by Equation (C) below. Equation (3) below is a spectral function expressed using the Källén-Lehmann spectral representation.

$$A_q(\omega) = \sum_n \left( \frac{|\langle E_n|c_q^\dagger|G\rangle|^2}{\omega + E_G - E_n + i\eta} + \frac{|\langle E_n|c_q|G\rangle|^2}{\omega - E_G + E_n + i\eta} \right),$$

(C)

In Equation (C), $E_G$ is the energy of the Hamiltonian H ground state. | G > is a ground state of the Hamiltonian H. $E_n$ is an $n^{th}$ eigenvalue of the Hamiltonian H. | $E_n$ > is an $n^{th}$ eigenstate of the Hamiltonian H.

The hybrid system 100 of the third exemplary embodiment computes the energy $E_G$ of the Hamiltonian H ground state, the $n^{th}$ eigenstate $E_n$ of the Hamiltonian H, < $E_n$ | $c_q$ | G>, and < $E_n$ | $c_q^\dagger$| G > that appear above in the imaginary part $A_q(\omega)$ of the spectral function for the Green's function in Equation (C).

Specifically, first the classical computer 110 and the quantum computer 120 of the hybrid system 100 compute the following Equations (D) based on a value θ* satisfying the convergence conditions of the first exemplary embodiment and the second exemplary embodiment. The energy $E_G$ of the Hamiltonian H ground state and a given $j^{th}$ eigenvalue $E_j$ of the Hamiltonian H are accordingly computed by computing the following Equations (D). Moreover, by computing the following Equations (D) based on the value θ* satisfying the convergence conditions finds the ground state | G > of the Hamiltonian H and the given $j^{th}$ eigenstate | $E_j$ > of the Hamiltonian H.

$$E_G = \langle \psi_0(\boldsymbol{\theta}^*)|H|\psi_0(\boldsymbol{\theta}^*)\rangle$$
$$E_j = \langle \psi_j(\boldsymbol{\theta}^*)|H|\psi_j(\boldsymbol{\theta}^*)\rangle$$
$$|G\rangle = |\psi_0(\boldsymbol{\theta}^*)\rangle$$
$$|E_j\rangle = |\psi_j(\boldsymbol{\theta}^*)\rangle$$

(D)

Note that in the Källén-Lehmann spectral representation of the spectral function, n in eigenvalue $E_n$ of the Hamiltonian H adopts all possible eigenstates. However, the third exemplary embodiment is only able to find eigenstates from the smallest eigenvalues to (k+1).

Note that in cases in which the quantum computer is a system with N qubits, n in eigenvalue $E_n$ of the Hamiltonian H adopts any value from 1 to $2^N$. Since the Hamiltonian H is expressed by a $2^N \times 2^N$ matrix, there are $2^N$ eigenstates available.

Next, the hybrid system 100 computes $< E_n \mid c_q \mid G>$, and $< E_n \mid c_q^\dagger \mid G >$ that appear above in the imaginary part $A_q (\omega)$ of the spectral function for the Green's function in Equation (C).

Specifically, the classical computer 110 of the hybrid system 100 transforms the electron operator $c_q$ of $< E_n \mid c_q \mid G>$ and the electron operator $c_q^\dagger$ of $< E_n \mid c_q^\dagger \mid G >$ to sums of the Pauli matrices using the Jordan-Wigner transformation as expressed by Equations (E) below. Note that the suffixes q and ↑ represent the wavenumber and spin of an electron.

$$c_{q,\uparrow} \rightarrow \sum_{n=1}^{Nq} \lambda_n^{(q)} P_n, \quad c_{q,\uparrow}^\dagger \rightarrow \sum_{n=1}^{Nq} \lambda_n^{(q)*} P_n, \tag{E}$$

Note that $\lambda_n$ in Equations (E) represents a coefficient which may be either a real number or a pure imaginary number. $P_n$ represents a Pauli matrix. $N_q$ represents the total number of states. Hereafter $c_{q,\uparrow}$ is denoted simply as $c_q$, and $c_{q,\uparrow}^\dagger$ is denoted simply as $c_q^\dagger$.

The classical computer 110 then splits the Pauli matrices sums obtained using Equations (E) into those in which the coefficient $\lambda_n$ is a real number and those in which $\lambda_n$ is an imaginary number.

The classical computer 110 then expresses the sums of the Pauli matrices that have been split into real number and the imaginary number parts in the following format.

$$c_q = \alpha + i\beta$$

$$c_q^\dagger = \alpha' + i\beta'$$

In the above Equations, $\alpha$ and $\beta$ (and $\alpha'$ and $\beta'$) are Hermitian operators, and are observable quantities. Namely, in the present exemplary embodiment, physical quantities that are non-measureable when in the original electron operator format are divided into measurable parts $\alpha$ and $\beta$ (and $\alpha'$ and $\beta'$).

Next, the classical computer 110 substitutes the electron operator real part and the electron operator imaginary part for a given variable A in Equation (F1) and Equation (F2) below. Specifically, the classical computer 110 substitutes $\alpha$ and $\beta$ (and $\alpha'$ and $\beta'$) obtained by splitting as above into the Equation (F1) and Equation (F2) below.

$$\mathrm{Re}\left(\langle\psi_i(\boldsymbol{\theta}^*)|A|\psi_j(\boldsymbol{\theta}^*)\rangle\right)$$
$$= \langle\psi_{ij}^{+x}(\boldsymbol{\theta}^*)|A|\psi_{ij}^{+x}(\boldsymbol{\theta}^*)\rangle - \frac{1}{2}\langle\psi_i(\boldsymbol{\theta}^*)|A|\psi_i(\boldsymbol{\theta}^*)\rangle - \frac{1}{2}\langle\psi_j(\boldsymbol{\theta}^*)|A|\psi_j(\boldsymbol{\theta}^*)\rangle \tag{F1}$$

$$\mathrm{Im}\left(\langle\psi_i(\boldsymbol{\theta}^*)|A|\psi_j(\boldsymbol{\theta}^*)\rangle\right)$$
$$= \langle\psi_{ij}^{+y}(\boldsymbol{\theta}^*)|A|\psi_{ij}^{+y}(\boldsymbol{\theta}^*)\rangle - \frac{1}{2}\langle\psi_i(\boldsymbol{\theta}^*)|A|\psi_i(\boldsymbol{\theta}^*)\rangle - \frac{1}{2}\langle\psi_j(\boldsymbol{\theta}^*)|A|\psi_j(\boldsymbol{\theta}^*)\rangle \tag{F2}$$

$\mid \psi_{ij}^{+x} (\theta) >$, $\mid \psi_{ij}^{+y} (\theta) >$ are defined as follows.

$$\left|\psi_{ij}^{+x}(\boldsymbol{\theta})\right\rangle = \frac{1}{\sqrt{2}}\left(\left|\psi_i(\boldsymbol{\theta})\right\rangle + \left|\psi_j(\boldsymbol{\theta})\right\rangle\right)$$

$$\left|\psi_{ij}^{+y}(\boldsymbol{\theta})\right\rangle = \frac{1}{\sqrt{2}}\left(\left|\psi_i(\boldsymbol{\theta})\right\rangle + i\left|\psi_j(\boldsymbol{\theta})\right\rangle\right)$$

A in Equation (F1) and Equation (F2) represents a given variable. The classical computer 110 substitutes $c_q = \alpha + i\beta$ and $c^\dagger q = \alpha' + i\beta'$ for A in Equation (F1) and Equation (F2).

The classical computer 110 also substitutes a given $i^{th}$ eigenstate $< E_i \mid$ of the Hamiltonian H for $< \psi_i (\theta^*) \mid$ of $< \psi_i (\theta^*) \mid A \mid \psi_i (\theta^*) >$ on the left side of Equation (F1) and of Equation (F2). The classical computer 110 further substitutes a given $j^{th}$ eigenstate $< E_j \mid$ of the Hamiltonian H for $\mid \psi_j (\theta^*) >$ on the left side of Equation (F1) and of Equation (F2).

The left sides of Equation (F1) and Equation (F2) thus become $< E_i \mid c_q \mid E_j >$. The classical computer 110 sets a given $i^{th}$ eigenvalue $E_i$ of the Hamiltonian H as the $n^{th}$ eigenvalue $E_n$ of the Hamiltonian H, and sets a given $j^{th}$ eigenvalue $E_j$ of the Hamiltonian H as the energy $E_G$ of the Hamiltonian H ground state. The left side of Equation (F1) and Equation (F2) is accordingly changed from $< E_i \mid c_q \mid E_j >$ to $< E_n \mid c_q \mid G >$.

As described above, $\alpha + i\beta$ is substitutable for c of $< E_n \mid c_q \mid G >$, to give $< E_n \mid c_q \mid G > = < E_n \mid \alpha \mid G > + i < E_n \mid \beta \mid G >$.

The quantum computer 120 performs quantum computation to compute $< E_n \mid c_q \mid G >$ based on the Equation obtained in this manner. Note that $< E_n \mid c^\dagger_q \mid G >$ may also be computed by a similar method.

The classical computer 110 then computes Equation (C) above based on the energy $E_G$ of the Hamiltonian H ground state, $n^{th}$ eigenvalue $E_n$ of the Hamiltonian H, $< E_n \mid c_q \mid G >$, and $< E_n \mid c_q^\dagger \mid G >$ so as to compute the imaginary part $A_q (\omega)$ of the spectral function for the Green's function. The real part of the spectral function is also computable as long as the imaginary part $A_q (\omega)$ of the spectral function for the Green's function can be obtained. This enables computation of the Green's function.

Note that when computing the Green's function, the Hamiltonian H, the wavenumber q (or a, b) that is information to specify the electron operator, k representing how many eigenvalues to find, the set of k+1 mutually orthogonal initial states, and the quantum circuit U ($\theta$) are decided using the user terminal 130 or the classical computer 110. The operators $\alpha$, $\beta$, $\alpha'$, and $\beta'$, obtained when split into $c_q$ and $c_q^\dagger$ may also be decided by the user terminal 130 or the classical computer 110.

The quantum computer 120 acquires the set of k+1 mutually orthogonal initial states, the quantum circuit U ($\theta$), and the operators $\alpha$, $\beta$, $\alpha'$, and $\beta'$ obtained when split into $c_q$ and $c_q^\dagger$, which have been decided by the user terminal 130 or the classical computer 110, and performs quantum computation based thereon.

Note that although in the third exemplary embodiment explanation has been given regarding an example in which there is at least one different coefficient $w_j$ out of the plural coefficients $w_j$, there is no limitation thereto. For example, in a case in which all of the plural coefficients $w_j$ have the same value, computation of the Green's function may be executed based on the following literature.

R. M. Parrish, E. G Hohenstein, P. L. McMahon, and T. J. Marttinez, Physical Review Letters 122, 230401 (2019).

The third exemplary embodiment thus enables the Green's function to be computed employing a method for finding Hamiltonian excited states.

The processing executed by the CPU reading software (a program) in the exemplary embodiments described above may be executed by various types of processor other than a CPU. Such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). The processing may be executed by any one of these various types of processor, or by a combination of two or more of the same type or different types of processor (such as plural FPGAs, or a combination of a CPU and an FPGA). The hardware structure of these various types of processors is more specifically an electric circuit combining circuit elements such as semiconductor elements.

Moreover, although in the exemplary embodiments described above explanation has been given regarding a mode in which a program is stored (installed) in advance in storage, there is no limitation thereto. A program may be provided in a format stored on a non-transitory storage medium such as compact disk read only memory (CD-ROM), digital versatile disk read only memory (DVD-ROM), or universal serial bus (USB) memory. Alternatively, a program may be configured in a format downloadable from an external device over a network.

The respective processing of the present exemplary embodiments may be performed by a configuration of a computer, server, or the like including a generic computation processing device and storage device, with the respective processing being executed by a program. Such a program may be stored in the storage device, provided recorded on a recording medium such as a magnetic disc, an optical disc, or semiconductor memory, or provided over a network. Obviously any other configuration elements are also not limited to implementation by a single computer or server, and they may be distributed between plural computers connected together over a network and implemented thereon.

Note that the present exemplary embodiments are not limited to the exemplary embodiments described above, and various modifications and applications are possible within a range not departing from the spirit of the respective exemplary embodiments.

The disclosures of Japanese Patent Application No. 2018-207825, filed on November 4, 2018, and Japanese Patent Application No. 2019-130414, filed on July 12, 2019, are incorporated in their entirety in the present specification by reference herein. All cited documents, patent applications, and technical standards mentioned in the present specification are incorporated by reference in the present specification to the same extent as if each individual cited document, patent application, or technical standard was specifically and individually indicated to be incorporated by reference.

Example

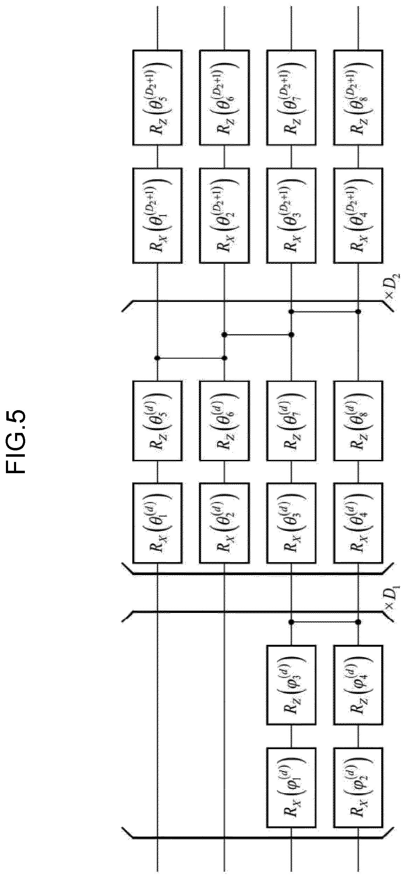

Simulation results are illustrated for a Hamiltonian H with n = 4. Fig. 5 illustrates an example for the first quantum circuit U ($\theta$) and the second quantum circuit V ($\varphi$) illustrated in Fig. 4, in which parameters $D_1$ and $D_2$ indicate the number of repetitions within the respective parentheses, with $D_1 = 2$ and $D_2 = 6$. The set of initial states was {|0000>, |0001>, |0010>, |00011>}. Initial values of the first parameter $\theta_1$ and the second parameter $\varphi_1$ were set to random numbers in a fixed range from 0 up to but not including $2\pi$. The results that gives the lowest value for the cost function from out of the optimizations performed for 10 different initial values are given below. A SciPy library BFGS method was employed in parameter optimization. The excitation order k to find the excited states was set to 3.

The Hamiltonian H that expresses the problem to be solved is represented by the following equation. This is a fully coupled transverse-field Ising model. The coefficients $a_i$ and $J_{ij}$ are randomly sampled from a uniform distribution from 0 up to but not including 1. The qubit number n is 4.

$$H = \sum_{i=1}^{n} a_i X_i + \sum_{i=1}^{n} \sum_{j=1}^{i-1} J_{ij} Z_i Z_j$$

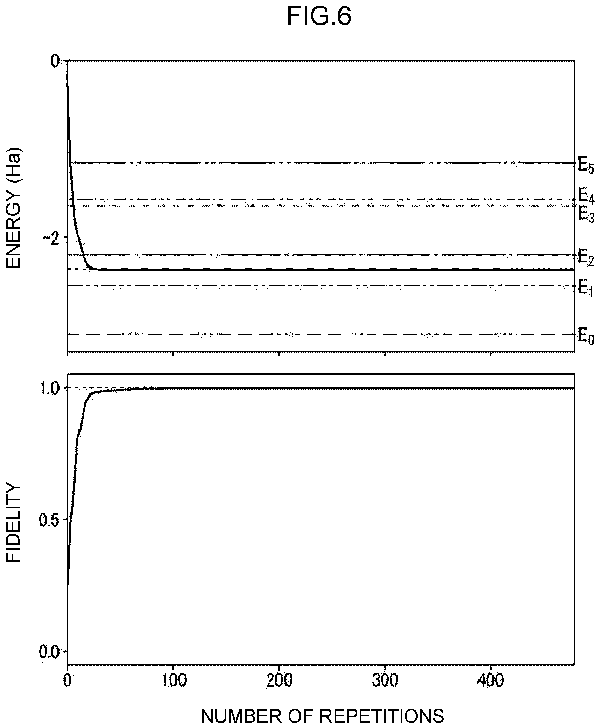

Fig. 6 illustrates an optimization process for the first parameter $\theta$. In Fig. 6, fidelity is defined by the overlap between extensible space defined by { | g >, | $e_1$ >, | $e_1$ >, | $e_1$ >} and the output of the first quantum circuit U ($\theta$). More specifically, fidelity is defined using the following equation, in which for convenience | g > is denoted by $e_0$ >, and in which | $\psi_j$ ($\theta$) > denotes the quantum state after the first quantum circuit U ($\theta$) has been executed for the j$^{th}$ initial state (wherein j is an integer from 0 to k). It is apparent from Fig. 6 that as expected fidelity approaches 1 as the cost function approaches the minimum value.

$$\frac{1}{4} \sum_{i=0}^{n} \sum_{j=0}^{n} |\langle e_i | \psi_j(\theta) \rangle|^2$$

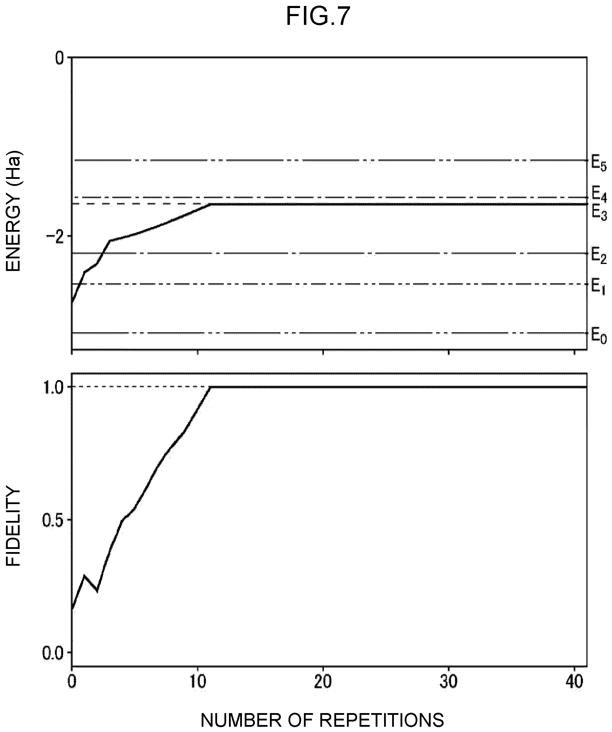

Fig. 7 illustrates an optimization process for the second parameter $\varphi$. A quantum computation is executed here for the third initial state | 0010 >, and fidelity is defined by the following equation. It can be confirmed from Fig. 7 that the energy expected value converges precisely on the value of the third excited state.

$$|\langle e_k | U(\theta^*) V(\phi) | 0010 \rangle|^2$$

**Claims**

1. A method for finding excited states of a Hamiltonian, the method comprising:

> a step of deciding a set of k+1 mutually orthogonal initial states for a Hamiltonian H of qubit number n (wherein k is an integer from 0 to $2^{n-1}$ and n is a positive integer);
> a step of deciding a first quantum circuit U ($\theta$) that is a unitary quantum circuit of qubit number n;
> a step of deciding a first parameter $\theta_i$ and generating quantum computation information for executing the first quantum circuit U ($\theta_i$) on a qubit cluster of a quantum computer;
> a step of storing a computation result of respective quantum computations based on the quantum computation information for each of the set of initial states;
> a step of computing an expected value sum $L_1$ ($\theta_i$) of the Hamiltonian H expressed by Equation (1) based on the computation results for the initial states; and
> a step of changing the first parameter $\theta_i$ in a direction in which the sum approaches a minimum value and storing a value $\theta^*$ when a convergence condition has been satisfied

$$L_1(\theta_i) = \sum_{j=0}^{k} w_j < \psi_j(\theta_i)|H|\psi_j(\theta_i) > \qquad (1)$$

> wherein $| \psi_j (\theta_i) >$ is a quantum state after executing the first quantum circuit ($\theta_i$) for a $j^{th}$ initial state, and $w_j$ is a positive coefficient.

2. The method of claim 1, wherein ws that is one of coefficients $w_j$ (wherein s is an integer from 0 to k) has a smaller value than other of the coefficients $w_j$ (when $j \neq s$).

3. The method of claim 2, further comprising a step of transmitting information relating to a quantum state $| \psi_s(\theta^*) >$ as solution information relating to a $k^{th}$ excited state.

4. The method of claim 1, wherein the coefficients $w_j$ are each the same value.

5. The method of claim 4, further comprising:

> a step of deciding a second quantum circuit V ($\varphi$) that intermingles the set of initial states;
> a step of deciding a second parameter $\varphi_i$ and generating quantum computation information for executing a first quantum circuit U ($\theta^*$) and a second quantum circuit V ($\varphi_i$) on a qubit cluster of a quantum computer;
> a step of storing a computation result of the quantum computation for a given $s^{th}$ initial state from out of the set of initial states based on the quantum computation information (wherein s is an integer from 0 to k);
> a step of computing an expected value $L_2$ ($\varphi_i$) of the Hamiltonian H expressed by Equation (2) based on the computation result for the $s^{th}$ initial state; and
> a step of changing the second parameter $\varphi_i$ in a direction in which the expected value approaches a maximum value and storing a value $\varphi^*$ when a convergence condition has been satisfied

$$L_2(\phi_i) = < \psi_s(\phi_i)|H|\psi_s(\phi_i) > \qquad (2)$$

6. The method of claim 5, wherein the second quantum circuit V ($\varphi$) operates only on k+1 states of the set of initial states.

7. The method of claim 5 or claim 6, further comprising a step of transmitting $| \psi_j (\varphi_i) >$ as a quantum state after the second quantum circuit ($\varphi_i$) has been executed for the $j^{th}$ initial state, and transmitting information relating to $| \psi_s(\varphi^*) >$ as solution information relating to a $k^{th}$ excited state.

8. The method of any one of claim 1 to claim 7, wherein the method is executed by a classical computer connected to the quantum computer over a computer network.

9. The method of claim 1, wherein when computing

an energy $E_G$ of a ground state of the Hamiltonian H,
an $n^{th}$ eigenvalue $E_n$ of the Hamiltonian H,
$< E_n \mid c_q \mid G >$ (wherein $\mid E_n >$ is an $n^{th}$ eigenstate of the Hamiltonian H, $\mid G >$ is the Hamiltonian H ground state, and $c_q$ is an electron operator), and
$< E_n \mid c_q{}^\dagger \mid G >$ (wherein $^\dagger$ is a Hermitian conjugate), which appear in an imaginary part $A_q (\omega)$ of a spectral function for a Green's function (wherein q is a wavenumber and co is a frequency), the method further comprises:

a step of using Equation (3) below to compute an energy $E_G$ of a ground state of the Hamiltonian H and a given $j^{th}$ eigenvalue $E_j$ of the Hamiltonian H based on the value $\theta^*$ when the convergence condition was satisfied;
a step of splitting the electron operator $c_k$ into an electron operator real part and an electron operator imaginary part;
a step of computing $< E_n \mid c_q \mid G >$ and $< E_n \mid c_q{}^\dagger \mid G >$ based on the value $\theta^*$ when the convergence condition was satisfied by substituting the $n^{th}$ eigenstate $< E_n \mid$ of the Hamiltonian H for $< \psi_i (\theta^*) \mid$ of $< \psi_i (\theta^*) \mid A \mid \psi_j (\theta^*) >$ on the left side of Equation (4) below, by substituting the Hamiltonian H ground state $\mid G >$ for $\psi_j (\theta^*) >$ of $< \psi_i (\theta^*) \mid A \mid \psi_j (\theta^*) >$ on the left side of Equation (4) below, and substituting the electron operator real part and the electron operator imaginary part for a given variable A; and a step of computing the imaginary part $A_q (\omega)$ of the spectral function for the Green's function by computing Equation (5) below based on the Hamiltonian H ground state energy $E_G$, the $n^{th}$ eigenvalue $E_n$ of the Hamiltonian H as obtained by setting n for the j of the given $j^{th}$ eigenvalue $E_j$ of the Hamiltonian H, $< E_n \mid c_q \mid G >$, and $< E_n \mid c_q{}^\dagger] G >$

$$E_G = \langle \psi_0(\boldsymbol{\theta}^*) | H | \psi_0(\boldsymbol{\theta}^*) \rangle$$
$$E_j = \langle \psi_j(\boldsymbol{\theta}^*) | H | \psi_j(\boldsymbol{\theta}^*) \rangle$$
$$|G\rangle = |\psi_0(\boldsymbol{\theta}^*)\rangle$$
$$|E_j\rangle = |\psi_j(\boldsymbol{\theta}^*)\rangle \tag{3}$$

$$\mathrm{Re}\big(\langle \psi_i(\boldsymbol{\theta}^*) | A | \psi_j(\boldsymbol{\theta}^*)\rangle\big)$$
$$= \langle \psi_{ij}^{+x}(\boldsymbol{\theta}^*) | A | \psi_{ij}^{+x}(\boldsymbol{\theta}^*)\rangle - \frac{1}{2}\langle \psi_i(\boldsymbol{\theta}^*) | A | \psi_i(\boldsymbol{\theta}^*)\rangle - \frac{1}{2}\langle \psi_j(\boldsymbol{\theta}^*) | A | \psi_j(\boldsymbol{\theta}^*)\rangle$$

$$\mathrm{Im}\big(\langle \psi_i(\boldsymbol{\theta}^*) | A | \psi_j(\boldsymbol{\theta}^*)\rangle\big)$$
$$= \langle \psi_{ij}^{+y}(\boldsymbol{\theta}^*) | A | \psi_{ij}^{+y}(\boldsymbol{\theta}^*)\rangle - \frac{1}{2}\langle \psi_i(\boldsymbol{\theta}^*) | A | \psi_i(\boldsymbol{\theta}^*)\rangle - \frac{1}{2}\langle \psi_j(\boldsymbol{\theta}^*) | A | \psi_j(\boldsymbol{\theta}^*)\rangle \tag{4}$$

$$A_q(\omega) = \sum_n \left( \frac{\left| \langle E_n | c_q^\dagger | G \rangle \right|^2}{\omega + E_G - E_n + i\eta} + \frac{\left| \langle E_n | c_q | G \rangle \right|^2}{\omega - E_G + E_n + i\eta} \right) \tag{5}$$

wherein $\mid \psi^{+x}{}_{ij}(\theta) >$ and $\mid \psi^{+y}{}_{ij} (\theta) >$, are defined as follows, wherein the symbol "i" represents an imaginary unit when appearing in a location other than a suffix

$$\left| \psi_{ij}^{+x}(\boldsymbol{\theta}) \right\rangle = \frac{1}{\sqrt{2}} \big( |\psi_i(\boldsymbol{\theta})\rangle + |\psi_j(\boldsymbol{\theta})\rangle \big)$$

$$\left|\psi_{ij}^{+x}(\boldsymbol{\theta})\right\rangle = \frac{1}{\sqrt{2}}\left(\left|\psi_i(\boldsymbol{\theta})\right\rangle + \left|\psi_j(\boldsymbol{\theta})\right\rangle\right)$$

10. A program to cause a method for finding excited states of a Hamiltonian to be executed on a classical computer, the method causing the classical computer to execute steps comprising:

a step of deciding a set of k+1 mutually orthogonal initial states for a Hamiltonian H of qubit number n (wherein k is an integer from 0 to $2^{n-1}$ and n is a positive integer);

a step of deciding a first quantum circuit U ($\theta$) that is a unitary quantum circuit of qubit number n;

a step of deciding a first parameter $\theta_i$ and generating quantum computation information for executing the first quantum circuit U ($\theta_i$) on a qubit cluster of a quantum computer;

a step of storing a computation result of respective quantum computations based on the quantum computation information for each of the set of initial states;

a step of computing an expected value sum $L_1$ ($\theta_i$) of the Hamiltonian H expressed by Equation (1) based on the computation results for the initial states; and

a step of changing the first parameter $\theta_i$ in a direction in which the sum approaches a minimum value and storing a value $\theta^*$ when a convergence condition has been satisfied

$$L_1(\theta_i) = \sum_{j=0}^{k} w_j < \psi_j(\theta_i)|H|\psi_j(\theta_i) > \qquad (1)$$

wherein $|\psi_j(\theta_i)>$ is a quantum state after executing the first quantum circuit ($\theta_i$) for a $j^{th}$ initial state, and $w_j$ is a positive coefficient.

11. A classical computer for finding excited states of a Hamiltonian, the classical computer being configured to:

decide a set of k+1 mutually orthogonal initial states for a Hamiltonian H of qubit number n (wherein k is an integer from 0 to $2^{n-1}$ and n is a positive integer);

decide a first quantum circuit U ($\theta$) that is a unitary quantum circuit of qubit number n;

decide a first parameter $\theta_i$ and generate quantum computation information for executing the first quantum circuit U ($\theta_i$) on a qubit cluster of a quantum computer;

store a computation result of respective quantum computations based on the quantum computation information for each of the set of initial states;

compute an expected value sum $L_1$ ($\theta_i$) of the Hamiltonian H expressed by Equation (1) based on the computation results for the initial states; and

change the first parameter $\theta_i$ in a direction in which the sum approaches a minimum value and store a value $\theta^*$ when a convergence condition has been satisfied

$$L_1(\theta_i) = \sum_{j=0}^{k} w_j < \psi_j(\theta_i)|H|\psi_j(\theta_i) > \qquad (1)$$

wherein $|\psi_j(\theta_i)>$ is a quantum state after executing the first quantum circuit ($\theta_i$) for a $j^{th}$ initial state, and $w_j$ is a positive coefficient.

12. A quantum computer for finding excited states of a Hamiltonian, the quantum computer being configured to, based on quantum computation information including

a set of k+1 mutually orthogonal initial states for a Hamiltonian H of qubit number n (wherein k is an integer from 0 to $2^{n-1}$ and n is a positive integer),

a first quantum circuit U ($\theta$) that is a unitary quantum circuit of qubit number n, and

a first parameter $\theta_i$:

execute the first quantum circuit U $(\theta_i)$ on a qubit cluster; and
output a computation result of respective quantum computations based on the quantum computation information for each of the set of initial states.

**13.** A hybrid system for finding excited states of a Hamiltonian, the hybrid system comprising:

the classical computer of claim 11; and
the quantum computer of claim 12.

FIG.1

## FIG.2

USER TERMINAL       CLASSICAL COMPUTER       QUANTUM COMPUTER

S201

S202

S203

S204

S205

S206

S207

S208

S209

S210

S211

S212

EP 3 876 167 A1

# FIG.3

QUANTUM COMPUTER

CLASSICAL COMPUTER

USER TERMINAL

S301
S302
S303
S304
S305
S306
S307
S308
S309
S310

FIG.4

# FIG.5

# FIG.6

# FIG.7

## INTERNATIONAL SEARCH REPORT

| International application No. |
| --- |
| PCT/JP2019/041395 |

**A. CLASSIFICATION OF SUBJECT MATTER**
G06N 10/00(2019.01)i
FI: G06N10/00

According to International Patent Classification (IPC) or to both national classification and IPC

**B. FIELDS SEARCHED**

Minimum documentation searched (classification system followed by classification symbols)
G06N10/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
| --- | --- | --- |
| Y<br><br>A | NAKANISHI, K. M., et al., "Subspace-search variational quantum eigensolver for excited states", arXiv:1810.09434v1, version v1, [online], arXiv (CORNELL UNIVERSITY), 22 October 2018, pp. 1-7, [retrieved on 23 December 2019], Retrieved from the Internet: <URL:https://arxiv.org/pdf/1810.09434v1.pdf>, <URL:https://arxiv.org/abs/1810.09434v1>. Section I; Section II; Section II.A; Section II.C; Final three lines of section IV.9 | 1-8, 10-13<br><br>9 |
| Y<br><br>A | PERUZZO, A., et al., "A variational eigenvalue solver on a photonic quantum processor", Nature Communications, 23 July 2014, vol. 5, Article number: 4213, pp. 1-7, [retrieved on 23 December 2019], Retrieved from the Internet: <URL:https://www.nature.com/articles/ncomms5213>, ISSN: 2041-1723, <DOI:10.1038/ncomms5213>. fig. 1. | 1-8, 10-13<br><br>9 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 January 2020 (06.01.2020) | 21 January 2020 (21.01.2020) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018207825 A

- JP 2019130414 A

**Non-patent literature cited in the description**

- **O. HIGGOTT ; D. WANG ; S. BRIERLEY.** Variational Quantum Computation of Excited States. *arXiv: 1805.08138,* 2018

- **R. M. PARRISH ; E. G HOHENSTEIN ; P. L. MCMAHON ; T. J. MARTTINEZ.** *Physical Review Letters,* 2019, vol. 122, 230401